# NEUE EUROPÄISCHE PATENTSCHRIFT

(11) **EP 2 692 586 B2**
(45) Veröffentlichungstag und Bekanntmachung des Hinweises auf die Entscheidung über den Einspruch: **01.08.2018**
(45) Hinweis auf die Patenterteilung: 09.09.2015
(21) Anmeldenummer: 13178381.3
(22) Anmeldetag: 29.07.2013
(51) Int. Cl.: B60R 1/06

(54) **Außenkameravorrichtung für Fahrzeuge sowie Fahrzeug mit einer solchen Außenkameravorrichtung zur Erfassung von wenigstens einem gesetzlich vorgeschriebenen Sichtfeld**
External camera device for vehicles, as well as a vehicle having such an external camera device for recording at least one legally required field of view
Dispositif de caméra extérieure pour véhicules et véhicule doté d'un tel dispositif de caméra extérieure pour l'enregistrement d'au moins un champ de vision prescrit par la loi

(30) Priorität: 03.08.2012 DE 102012213813
(43) Veröffentlichungstag der Anmeldung: 05.02.2014
(73) Patentinhaber: MEKRA Lang GmbH & Co. KG, 90765 Fürth (DE)
(72) Erfinder: Lang, Werner, 91465 Ergersheim (DE); Zink, Matthias, 91620 Ohrenbach (DE)
(74) Vertreter: Winter, Brandl, Fürniss, Hübner, Röss, Kaiser, Polte - Partnerschaft mbB

(56) Entgegenhaltungen:
- EP-A1- 0 711 681
- EP-A1- 2 692 586
- WO-A1-08/304225
- DE-A1- 4 022 085
- DE-A1- 4 022 085
- US-A- 3 859 899
- US-A- 5 096 287
- US-A1- 2010 202 052
- US-A1- 20060 132 940
- US-A1- 20110 266 375

## Beschreibung

Die vorliegende Erfindung betrifft eine Außenkameravorrichtung für Fahrzeuge, insbesondere Kraftfahrzeuge sowie ein Fahrzeug mit einer solchen Außenkameravorrichtung zur Erfassung von wenigstens einem gesetzlich vorgeschriebenen Sichtfeld.

Zurzeit werden für die Erfassung der Umgebung von Kraftfahrzeugen hauptsächlich Spiegel eingesetzt. Dabei ist der witterungsbedingten Funktionsbeeinträchtigung von Spiegeln, beispielsweise durch Eisbildung oder Kondensation auf den Spiegeln durch unterschiedliche Systeme Rechnung getragen. In den Dokumenten DE 195 19 097 A1 sowie DE 295 04 485 U1 werden Rückspiegelsysteme vorgeschlagen, welche die Spiegel durch Beaufschlagung mit Warmluft von Sichtbeeinträchtigungen durch Temperatur oder Witterungsbedingungen befreien sollen. Für bestimmte gesetzlich vorgeschriebene Sichtfelder soll es jedoch in naher Zukunft erlaubt sein Kameramonitorsysteme bzw. indirekte Sichtsysteme einzusetzen. Dabei werden Kamerasysteme im Fahrzeuginneren installiert, um unterschiedliche Unterstützungs- oder Überwachungsfunktionen zu erfüllen. Derartige Kamerasysteme sind z. B. aus der DE 103 29 900 A1 bekannt. US 2010/0202052 A1 offenbart einen beheizten Spiegel. EP0711681A1 offenbart eine Außenkameravorrichtung

Außerdem, befinden sich in Versuchsfahrzeugen, Prototypen und Ausstellungsfahrzeugen auf Messen sind bereits Kameramonitorsysteme mit, sich anstelle der Außenspiegel vom Fahrzeug weg erstreckenden, Kameraarmen anstelle von Außenspiegeln im Einsatz. Hierbei hat sich herausgestellt, dass die Funktion dieser Kameravorrichtungen mit Optik und Elektronik aufgrund der höchst unterschiedlichen Witterungsbedingungen nicht immer gewährleistet ist. Insbesondere hat sich die Notwendigkeit herausgestellt, dass die Kameravorrichtung bei tiefen Temperaturen im Winter zusätzlich beheizt werden muss. Allerdings kann es auch im Sommer bei sehr heißem Wetter zu Fehlfunktionen kommen. Der Einsatz von Kamerasystemen, die auf entsprechend große Umgebungstemperaturdifferenzen ausgelegt sind, würde zu wesentlich höheren Kosten führen.

Es ist daher Aufgabe der vorliegenden Erfindung eine Außenkameravorrichtung sowie eine damit ausgerüstetes Fahrzeug anzugeben, dass eine erhöhte Zuverlässigkeit aufweist ohne dass derartige System übermäßig verteuert werden.

Die Lösung dieser Aufgabe erfolgt durch die Merkmale des Anspruchs 1 - Außenkameravorrichtung - sowie durch die Merkmale des Anspruchs 15 - Fahrzeug mit einer solchen Außenkameravorrichtung.

Dadurch, dass das in dem Kamerahalter ein Strömungskanal für ein Wärmetransportfluid ausgebildet ist, kann die in dem Kamerahalter angeordnete Kameraoptik sowie das der Kameraoptik zugeordnete optische Fenster so temperiert werden, dass keine Kondensatprobleme auftreten. Durch die thermische Kopplung des optischen Fensters mit der durch das Wärmetransportfluid temperierten Kameraoptik werden Wassertropfen, Reif oder Eis auf der Außenseite des optischen Fensters entfernt. Auf diese Weise lässt sich die Kameravorrichtung mit der Klimaeinrichtung eines Fahrzeugs verbinden, so dass die klimatisierte Luft aus dem Innern des Fahrzeugs auch den Strömungskanal in dem Kamerahalter als Wärmetransportfluid durchströmt. Durch diesen Luft- bzw. Wärmetransportfluidstrom wird die Kameraoptik und das optische Fenster der Temperatur des Wärmetransportfluids bzw. des Luftstroms aus der Klimaanlage des Fahrzeugs angeglichen. Vorteilhaft ist dabei weiterhin, dass bei extremen klimatischen Bedingungen, eine, im wesentlichen, auf Außentemperatur befindliche Kameraoptik und Kameraelektronik langsam temperiert wird, da auch die von der Klimaanlage, bzw. dem Belüftungssystem, zu erzielende Temperatur in diesem Fall erst nach einer gewissen Zeit anliegt. Dadurch werden zu rasche Temperaturänderungen vermieden, welche die Funktion oder Lebensdauer von empfindlichen elektrischen und elektronischen Bauteilen beeinträchtigen können. Da Klimaanlagen üblicherweise auf Temperaturen eingestellt werden, in denen sich der Mensch wohl fühlt und in diesen Temperaturbereichen auch technische Geräte problemlos funktionieren, wird auf diese Weise eine einfache Temperierung der Außenkameravorrichtung erreicht und somit die Zuverlässigkeit der Kamera erhöht, ohne dass das Kamerasystem übermäßig verteuert werden würde.

Gemäß der vorteilhaften Ausgestaltung der Erfindung sorgt die thermische Kopplung von Kameraoptik und Kameraelektronik mit dem Wärmetransportfluid dafür, dass Kameraoptik und Kameraelektronik unabhängig voneinander, jedoch zeitgleich temperiert werden. Dies hat gegenüber nur an der Optik (bzw. einem optischen Fenster) beheizten, bestrahlten oder bespritzten Kamerasystemen den Vorteil, dass alle Komponenten des Systems, einschließlich Optik und Elektronik eine im Wesentlichen identische Temperatur aufweisen. Durch den Wegfall eines Temperaturgefälles zwischen den Komponenten, lassen sich Sichtbehinderungen durch Kondenswasser an der Kameraoptik, aber auch das Auftreten von Schäden an der Kameraelektronik durch Temperatur- oder Kondensateinwirkung vermeiden.

Gemäß der vorteilhaften Ausgestaltung der Erfindung nach Anspruch 2 wird der Kamerahalter der außen an einem Fahrzeug anzubringenden Kameravorrichtung zweigeteilt in ein erstes Halterteil, dass von dem Strömungskanal für das Wärmetransportfluid durchströmt wird, und in ein zweites Halterteil das hermetisch geschlossen ist und die eigentliche Kamera mit Kameraoptik enthält. Das zweite Halterteil umfasst das optische Fenster, durch das die Kameraoptik Bilder erfassen kann bzw. das durch die Kameraoptik selbst gebildet wird. Durch diese Zweiteilung können beide Halterteile unabhängig voneinander für ihre jeweilige Aufgabe optimiert werden.

Durch die vorteilhafte Ausgestaltung der Erfindung nach Anspruch 3 kann in dem zweiten Halterteil extrem trockne Luft eingeschlossen werden, so dass die Gefahr der Bildung von Kondenswasser verringert wird.

Durch die vorteilhafte Ausgestaltung der Erfindung nach Anspruch 4 erfolgt der Wärmeübergang von den Grenzen des ersten Halterteils direkt auf das zweite Halterteil und damit auf Kameraoptik und Kameraelektronik.

Durch die vorteilhafte Ausgestaltung der Erfindung nach Anspruch 5 mit einem Wärmetauscher zwischen den beiden Halterteilen wird der Wärmeübergang zwischen den beiden Halterteilen und damit die gewünschte Temperaturregelung verbessert.

Durch die vorteilhafte Ausgestaltung der Erfindung nach Anspruch 6 ergibt sich ein geschlossener und damit optisch ansprechender Kamerahalter, wobei die Unterteilung in die zwei Halterteile durch die Wärmetauscheinrichtung selbst verfolgt. Die Wärmetauschereinrichtung schließt hierbei das zweite Halterteil gas- und flüssigkeitsdicht gegenüber dem Strömungskanal im ersten Halterteil ab und gleichzeitig koppelt sie die beiden Halterteile thermisch. Zur Erhöhung der Wärmeübertragungsleistung weist die Wärmetauschereinrichtung in an sich bekannter Weise eine Wand mit Wärmetauscherrippen auf.

Durch die vorteilhafte Ausgestaltung der Erfindung nach Anspruch 7 stellt eine einfache und effektive Ausgestaltung eines Wärmetauschers dar.

Durch die vorteilhafte Ausgestaltung der Erfindung nach Anspruch 8 bzw. 17 ist der Einlass des Strömungskanals für das Wärmetransportfluid bzw. die klimatisierte Luft aus dem Fahrzeuginneren in der Montagefläche des Kamerahalters angeordnet, so dass dieser Einlass bei montierter Außenkameravorrichtung nicht sichtbar ist und ohne weiteres dicht ausgestaltet werden kann.

Gemäß der vorteilhaften Ausgestaltung der Erfindung nach Anspruch 9 bzw. 18 ist auch der Auslass aus dem Strömungskanal für das Wärmetransportfluid in der Montagefläche des Kamerahalters angeordnet, so dass die temperierte Luft aus der Klimaanlage des Fahrzeugs über den Einlass in den Strömungskanal im ersten Halterteil einströmt und aus dem Auslass wieder in das Fahrzeug zurückgeführt wird.

Gemäß der alternativen Ausgestaltung der Erfindung nach Anspruch 10 bzw. 19 ist der Auslass des Strömungskanals nicht in der Montagefläche angeordnet, sondern neben dem optischen Fenster. Auf diese Weise kann durch die aus dem Auslass ausströmende temperierte Luft das optische Fenster von außen temperiert werden, so dass z.B. Wassertropfen, Reif oder Eis auf einfache Weise von dem optischen Fenster entfernt werden können. Auch wird durch diesen Luftstrom verhindert, das Schmutzpartikel auf dem optischen Fenster haften bleiben.

Gemäß der vorteilhaften Ausgestaltung der Erfindung nach Anspruch 11 umfasst der Auslass für das Wärmetransportfluid nicht nur eine, sondern mehrere Auslassöffnungen, so dass z. B. eine Auslassöffnung in der Montagefläche angeordnet werden kann während die andere neben dem optischen Fenster angeordnet ist oder eine Auslassöffnung so angeordnet ist, dass das Seitenfenster des Fahrzeugs angeströmt und damit enteist wird während die zweite Auslassöffnung die Temperierung des optischen Fensters von außen bewirkt. Zur Lenkung des Luftstroms aus dem Auslass werden vorzugsweise Fluidleit- bzw. Luftleitelemente eingesetzt - Anspruch 12 und 13.

Durch ein Fahrzeug mit einer Außenkameravorrichtung gemäß der vorliegenden Erfindung kann wenigstens eines der gesetzlich vorgeschriebenen Sichtfelder abgedeckt werden. Hierbei handelt es sich vorzugsweise um die Sichtfeldklassen II und III (Sichtbereich des Hauptaußenspiegels) und um die Sichtfeldklasse IV (Sichtbereich des Weitwinkelspiegels - Anspruch 15.

Gemäß der vorteilhaften Ausgestaltung der Erfindung nach Anspruch 16 erstreckt sich auch der Kamerahalter seitlich quer zur Fahrtrichtung von dem Fahrzeug weg. Jedoch ist dieser Kamerahalter bzw. dieser Kameraarm wesentlich kleiner als ein herkömmlicher Außenspiegel, so dass der Luftwiderstand im Vergleich zu heute üblichen Spiegelsystemen erheblich verringert ist.

Die übrigen Unteransprüche beziehen sich auf weitere vorteilhafte Ausgestaltungen der Erfindung.

Die Zeit, die bei LKWs benötigt wird, um den notwendigen Druck in den Bremszylindern aufzubauen, kann zur Temperierung der Außenkameravorrichtung genutzt werden. Gegebenenfalls kann hierbei die Luft als Wärmetransportfluid durch eine Zusatzheizung vorgewärmt werden.

Weitere Einzelheiten, Merkmale und Vorteile der Erfindung ergeben sich aus der nachfolgenden Beschreibung bevorzugten Ausführungsformen anhand der Zeichnungen.

Es zeigt:
Fig. 1 zeigt schematische eine perspektivische Darstellung einer Außenkameravorrichtung gemäß der vorliegenden Erfindung,
Fig. 2 zeigt die Anordnung dieser Darstellung einer Außenkameravorrichtung anstelle des Fahrzeugaußenspiegels an einem Fahrzeug,
Fig. 3 zeigt eine Schnittdarstellung einer ersten Ausführungsform der Außenkameravorrichtung,
Fig. 4 eine Schnittdarstellung einer zweiten Ausführungsform der Außenkameravorrichtung gemäß der vorliegenden Erfindung, und
Fig. 5 eine Schnittdarstellung einer dritten Ausführungsform der Außenkameravorrichtung gemäß der vorliegenden Erfindung.

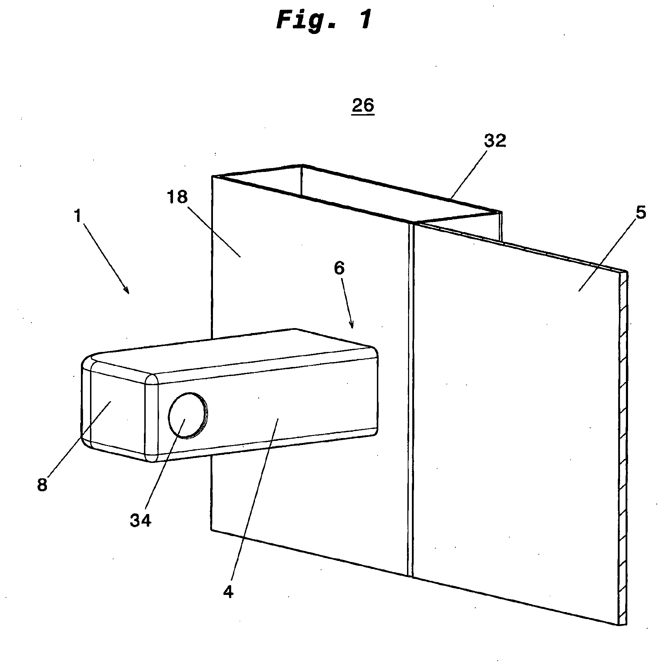

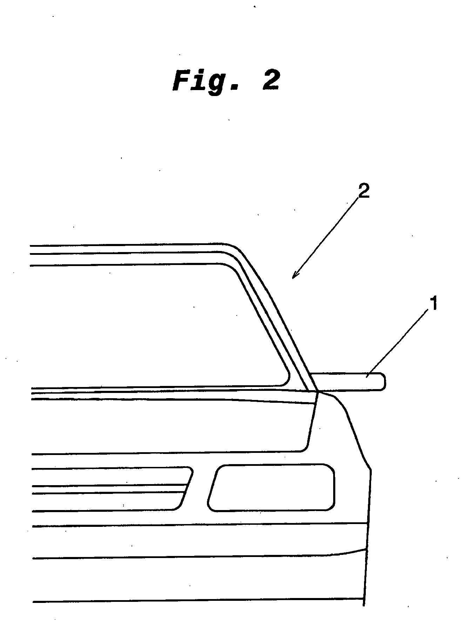

Fig. 1 und 2 zeigen eine erste Ausführungsform einer Außenkameravorrichtung 1 die anstelle eines Außenspiegels an einem Fahrzeug 2 angeordnet ist. Die Außenkameravorrichtung 1 umfasst einen armförmigen, einstückigen Kamerahalter 4, das sich wie ein herkömmlicher Außenspiegel im Bereich der A-Säule neben einer Seitenscheibe 5 des Fahrzeugs 2 angeordnet ist und sich quer zur Fahrtrichtung seitlich von dem Fahrzeug 2 wegerstreckt. Der Kamerahalter weist ein dem Fahrzeug 2 zugewandtes Ende 6 und ein freies, vom Fahrzeug 2 abgewandtes Ende 8 auf.

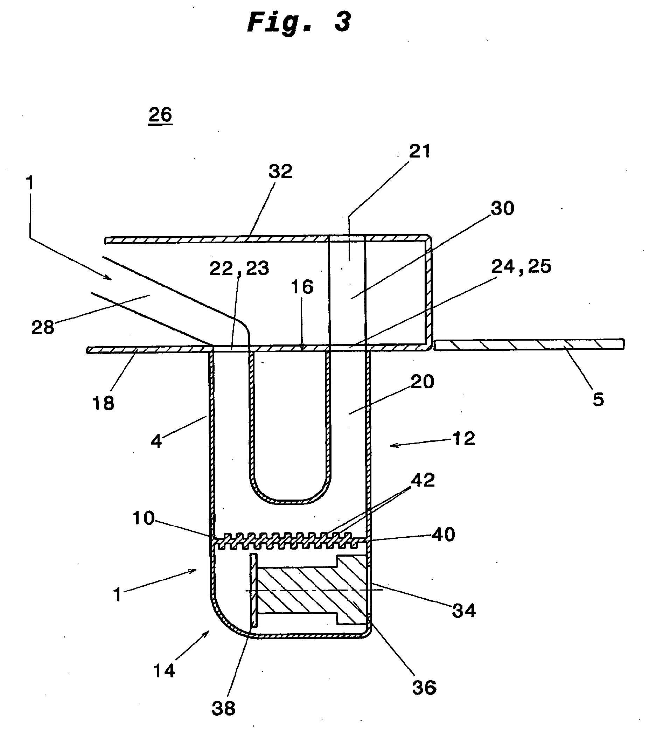

Fig. 3 zeigt eine Schnittdarstellung - horizontale Schnittebene - durch die an dem Fahrzeug 2 montierte erste Ausführungsform der Außenkameravorrichtung 1. Der einstückige Kamerahalter 4 wird durch eine Wärmetauschereinrichtung 10 in ein erstes Halterteil 12 mit dem einem dem Fahrzeug zugewandten Ende 6 und in ein zweites Halterteil 14 mit einem freien Ende 8 unterteilt. An dem dem Fahrzeug zugewandten Ende 6 des Kamerahalters 4 ist eine Montagefläche 16 ausgebildet, die an einer Außenseite 18 des Fahrzeugs 2 anliegt.

Das erste Halterteil 12 ist als Strömungskanal 20 für ein Wärmetransportfluid in Form von Luft 21 aus der Klimaanlage des Fahrzeugs 2 ausgebildet. Der Strömungskanal 20 weist einen Einlass 22 mit einer Einlassöffnung 23 auf durch die Luft aus der Klimaanlage des Fahrzeugs in den Strömungskanal 20 einströmt und einen Auslass 24 mit einer Auslassöffnung 25 auf, durch die Luft aus dem Strömungskanal 20 wieder in das Fahrzeuginnere 26 geführt wird. Sowohl die Einlassöffnung 23 als auch die Auslassöffnung 25 sind in der Montagefläche 16 angeordnet. Die Einlassöffnung 23 ist fluchtend mit einem Zufuhrluftkanal 28 verbunden, der zumindest die Außenfläche 18 des Fahrzeugs 2 durchsetzt. Der Zufuhrluftkanal zweigt von einer Einlassöffnung der Klimaanlage in das Fahrzeuginnere 26 ab - nicht dargestellt. Die Auslassöffnung 25 ist fluchtend mit einem Stichkanal 30 verbunden, der sowohl die Außenfläche 18 als auch eine Innenwand 32 des Fahrzeugs 2 durchsetzt und somit die Luft aus dem Strömungskanal 20 wieder in das Fahrzeuginnere 26 zurück führt.

Das zweite Halterteil 14 ist hermetisch gegen die Umgebung abgedichtet und weist ein optisches Fenster 34 auf, das entgegen der Fahrtrichtung des Fahrzugs weist. In dem zweiten Halterteil 14 hinter dem optischen Fenster 34 ist eine Kameraoptik 36 angeordnet. Zusätzlich ist in dem zweiten Halterteil eine zugehörige Kameraelektronik 38 untergebracht. Die Wärmetauschereinrichtung 10, die der Kamerahalter 4 in das erste und zweite Halterteil unterteilt ist eine Wand 40 aus einem gut Wärme leitenden Material, z. B. Kupfer oder Aluminium, und ist mit Wärmetauscherrippen 42 versehen. Die Wärmetauscherrippen 40 erstrecken sich quer zu der Wand 40 und erstrecken sich sowohl in das erste als auch das zweite Halterteil 12, 14 hinein. Durch die Wärmetauscherrippen 40 wird in bekannter Weise die Wärmetauscherfläche der Wärmetauschereinrichtung 10 vergrößert.

Die Luft 21 als Wärmetransportmittel in dem Strömungskanal 20 weist aufgrund der Fahrzeug-Klimaanlage Zimmertemperatur auf. Je nach den außerhalb des Fahrzeugs 2 herrschenden Temperaturverhältnissen nimmt daher die Wärmetauschereinrichtung 10 Wärme aus dem Luftstrom 21 auf und erwärmt das zweite Halterteil 14 mit darin befindlicher Kameraoptik 36 und -elektronik 38 sowie das optische Fenster 34 oder der Luftstrom nimmt über die Wärmetauschereinrichtung 10 Wärme aus dem zweiten Halterteil 14 auf und kühlt es auf die Zimmertemperatur des Fahrzeuginneren 26 ab. Auf diese Weise werden die temperaturempfindlichen Komponenten 34, 36, 38 der Außenkameravorrichtung 1 auf einfache Weise in unkritischen Temperaturbereichen gehalten, ohne dass hierfür eine spezielle Temperaturregelung notwendig wäre.

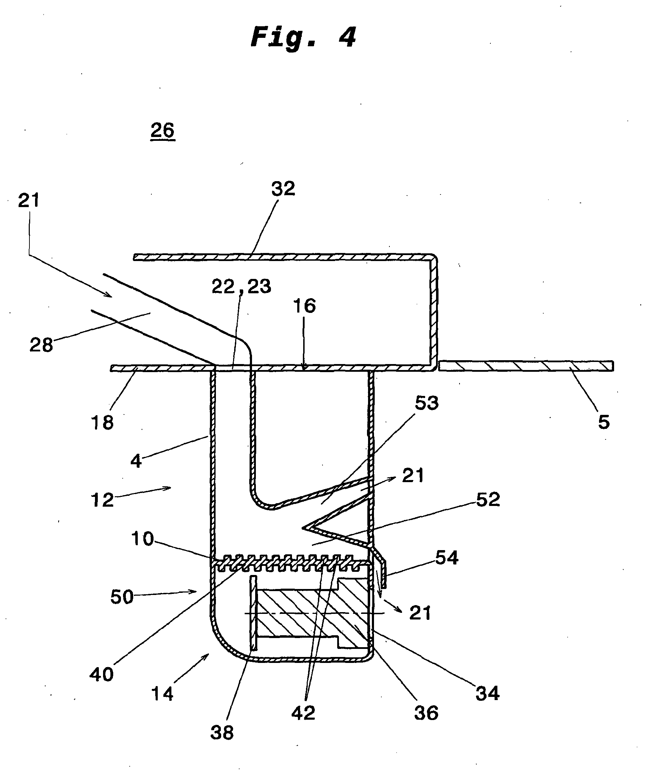

Fig. 4 zeigt eine zweite Ausführungsform einer Außenkameravorrichtung 50, die sich von der ersten Ausführungsform nach Fig. 3 dadurch unterscheidet, dass der Auslass 24 nicht in das Fahrzeuginnere 26 zurückgeführt wird, sondern das der Auslass 24 im Bereich des optischen Fensters in die Umgebung des Fahrzeugs 2 mündet. Zudem weist der Auslass 24 nicht eine einzige Auslassöffnung, sondern eine erste und eine zweite Auslassöffnung 52 und 53 auf. Die aus der ersten Auslassöffnung 52 ausströmende Luft wird durch ein erstes Fluidleitelement 54 wenigstens teilweise auf die Außenseite des optischen Fensters 34 geleitet. Die zweite Auslassöffnung 53 ist durch die Führung des Strömungskanals 20 im ersten Halterteil 12 und durch ein zweites Fluidleitelement 56 so ausgebildet, dass der aus der zweiten Auslassöffnung 53 austretenden Luftstrom 21 auf die Außenseite der Seitenscheibe 5 geführt wird.

Durch die zwei Auslassöffnungen 52, 53 wird zum einen das optische Fenster 24 und zum anderen die Seitenscheibe 5 gegebenenfalls enteist bzw. werden durch den Luftstrom Feuchtigkeit und Schmutz weggeblasen. Auch wird durch die fehlende Rückführung des Luftstroms 21 in das Fahrzeuginnere 26 die Optik des Fahrzeuginneren 26 nicht verändert.

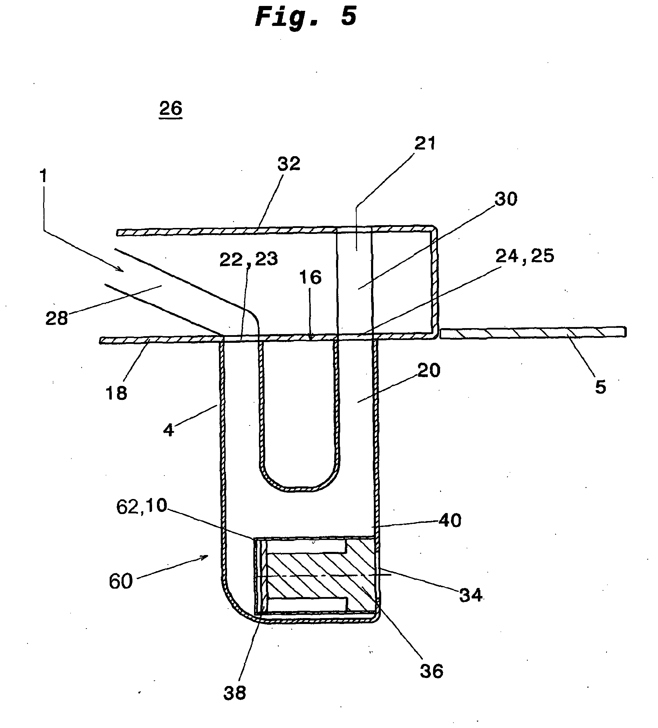

Fig. 5 zeigt eine dritte Ausführungsform der Erfindung mit einer Außenkameravorrichtung 60, die sich von der ersten Ausführungsform nach Fig. 3 vor allem dadurch unterscheidet, dass der Kamerahalter 4 einteilig ausgebildet ist und Kameraoptik 36 und Kameraoptik 38 in einer Umhüllung 62 angeordnet sind, die die Wärmetauschereinrichtung 10 darstellt. Das Wärmetransportfluid bzw. die klimatisierte Luft 21 umströmt die Umhüllung 62 und temperiert somit Kameraoptik, 36, Kameraelektronik 38 und das optische Fenster.

In nicht näher dargestellter Weise können Aus- und Einlass 22, 24 entsprechend der Ausführungsform nach Fig. 4 ausgeführt sein.

### Bezugszeichenliste:

- 1: Außenkameravorrichtung
- 2: Fahrzeug
- 4: Kamerahalter
- 5: Seitenscheibe
- 6: dem Fahrzeug zugewandtes Ende von 4
- 8: vom Fahrzeug abgewandtes Ende von 4, freies Ende
- 10: Wärmetauschereinrichtung
- 12: erstes Halterteil
- 14: zweites Halterteil
- 16: Montagefläche
- 18: Außenfläche von 2
- 20: Strömungskanal
- 21: Wärmetransportmittel, Luftstrom
- 22: Einlass
- 23: Einlassöffnung
- 24: Auslass
- 25: Auslassöffnung
- 26: Fahrzeuginneres
- 28: Zufuhrluftkanal
- 30: Stichkanal
- 32: Innenwand von 2
- 34: optisches Fenster
- 36: Kameraoptik
- 38: Kameraelektronik
- 40: Trennwand von 10
- 42: Wärmetauscherrippen von 10

- 50: Außenkameravorrichtung
- 52: erste Auslassöffnung
- 53: zweite Auslassöffnung
- 54: erstes Fluidleitelement
- 56: zweites Fluidleitelement

- 60: Außenkameravorrichtung
- 62: Umhüllung bzw. Wärmetauschereinrichtung

## Patentansprüche

1. Außenkameravorrichtung für Fahrzeuge (2), insbesondere Kraftfahrzeuge, mit
einem Kamerahalter (4),
einer Kameraoptik (36) und einer Kameraelektronik (38), wobei die Kameraoptik (36) in dem Kamerahalter (4) angeordnet ist,
einem in dem Kamerahalter (4) vor der Kameraoptik (36) ausgebildeten optischen Fenster (34), und
einem in dem Kamerahalter (4) ausgebildeten Strömungskanal (20) für ein Wärmetransportfluid (21),
wobei der Strömungskanal (20) einen Einlass (22) und einen Auslass (24) zur Zu- und Abfuhr des Wärmetransportfluids (21) aufweist,
**dadurch gekennzeichnet,**
**dass** der Strömungskanal (20) thermisch mit der Kameraoptik (36) gekoppelt ist, dass der Einlass (22) des Strömungskanals (20) mit dem Belüftungssystem oder der Klimaanlage des Fahrzeugs verbindbar ist, und
**dass** die Kameraelektronik (38) in dem außen liegenden Kamerahalter (4) angeordnet ist, und
**dass** der Strömungskanal (20) thermisch mit der Kameraelektronik (38) gekoppelt ist.

2. Außenkameravorrichtung nach Anspruch 1, **dadurch gekennzeichnet,**
**dass** der Kamerahalter (4) ein erstes und ein zweites Halterteil (12, 14) umfasst, dass der Strömungskanal (20) mit Einlass (22) und Auslass (24) in dem ersten Halterteil (12) ausgebildet ist, und
**dass** in dem zweiten Halterteil (14) Kameraoptik (36), Kameraelektronik (38) und optisches Fenster (34) angeordnet sind.

3. Außenkameravorrichtung nach Anspruch 2, **dadurch gekennzeichnet, dass** das zweite Halterteil (14) gas- und flüssigkeitsdicht ausgebildet ist.

4. Außenkameravorrichtung nach Anspruch 2 oder 3, **dadurch gekennzeichnet, dass** das erste Halterteil (12) als Strömungskanal (20) ausgebildet ist.

5. Außenkameravorrichtung nach einer einem der vorhergehenden Ansprüche,
**dadurch gekennzeichnet, dass** zwischen den beiden Halterteilen (12, 14) eine Wärmetauschereinrichtung (10) angeordnet ist, die die beiden Halterteile (12, 14) thermisch miteinander koppelt.

6. Außenkameravorrichtung nach Anspruch 4, **dadurch gekennzeichnet, dass** der Kamerahalter (4) einstückig ausgebildet und durch die Wärmetauschereinrichtung (10) in das erste und das zweite Halterteil (12, 14) unterteilt ist.

7. Außenkameravorrichtung einem der vorhergehenden Ansprüche 5 oder 6,
**dadurch gekennzeichnet, dass** die Wärmetauschereinrichtung (10) eine Trennwand (40) mit Wärmetauscherrippen (42) ist.

8. Außenkameravorrichtung nach einem der vorhergehenden Ansprüche, **dadurch gekennzeichnet, dass** der Kamerahalter (4) eine Montagefläche (16) zur Montage der Außenkameravorrichtung an einem Fahrzeug (2) aufweist, und dass in der Montagefläche (16) der Einlass (22) des Strömungskanals (20) angeordnet ist.

9. Außenkameravorrichtung nach Anspruch 8, **dadurch gekennzeichnet, dass** in der Montagefläche (16) der Auslass (24) des Strömungskanals (20) angeordnet ist.

10. Außenkameravorrichtung nach Anspruch 8, **dadurch gekennzeichnet, dass** der Auslass (24) des Strömungskanals (20) neben dem optischen Fenster (34) angeordnet ist.

11. Außenkameravorrichtung nach einem der vorhergehenden Ansprüche, **dadurch gekennzeichnet, dass** der Auslass (24) des Strömungskanals (20) eine Mehrzahl von Auslassöffnungen (52, 53) umfasst.

12. Außenkameravorrichtung nach einem der vorhergehenden Ansprüche, **dadurch gekennzeichnet, dass** im Bereich des Auslasses (24) des Strömungskanals (20) ein erstes Fluidleitelement (54) angeordnet ist.

13. Außenkameravorrichtung nach Anspruch 12, **dadurch gekennzeichnet, dass** das erste Fluidleitelement (54) so ausgebildet ist, dass es den Wärmetransportfluidstrom (21) aus dem Auslass (24) wenigstens teilweise auf das optische Fenster (34) leitet.

14. Außenkameravorrichtung nach einem der vorhergehenden Ansprüche, **dadurch gekennzeichnet, dass** der Kamerahalter (4) ein freies vom Fahrzeug (2) wegweisendes Ende (8) und ein dem Fahrzeug zugewandtes Ende (6) aufweist, und dass das optische Fenster (34) seitlich in dem Kamerahalter (2) zwischen freiem Ende (8) und Montagefläche (16) angeordnet ist.

15. Fahrzeug, insbesondere Kraftfahrzeug mit wenigstens einer Außenkameravorrichtung (1; 50; 60) nach einem der vorhergehenden Ansprüche zur Erfassung von wenigstens einem gesetzlich vorgeschriebenen Sichtfeld.

16. Fahrzeug nach Anspruch 15, **dadurch gekennzeichnet, dass** der Kamerahalter (4) sich seitlich von dem Fahrzeug (2) wegerstreckt.

17. Fahrzeug nach Anspruch 15 oder 16, **dadurch gekennzeichnet, dass** der Einlass (22) des Strömungskanals (20) mit dem Belüftungssystem oder der Klimaanlage des Fahrzeugs (2) verbunden ist.

18. Fahrzeug nach Anspruch 17, **dadurch gekennzeichnet, dass** der Auslass (24) des Strömungskanals (20) mit dem Belüftungssystem oder der Klimaanlage des Fahrzeugs verbunden ist.

19. Fahrzeug nach Anspruch 15 oder 16, **dadurch gekennzeichnet, dass** ein zweites Fluidleitelement (56) vorgesehen ist, das die Fluidströmung (21) aus dem Auslass des Strömungskanals (20) wenigstens teilweise auf eine Seitenscheibe (5) des Fahrzeugs (2) lenkt.

## Claims

1. An external camera device for vehicles (2), in particular motor vehicles, comprising:
a camera holder (4),
camera optics (36) and camera electronics (38), wherein the camera optics (36) are disposed in the camera holder (4),
an optical window (34) in the camera holder (4) constructed in front of the camera optics (36), and
a flow channel (20) constructed in the camera holder (4) that guides a heat-transport fluid (21),
wherein the flow channel (20) includes an inlet (22) and an outlet (24) for supplying and removing the heat-transport fluid (21),
**characterized in that**
the flow channel (20) is thermally coupled to the camera optics (36),
that the inlet (22) of the flow channel (20) can be connected to the ventilation system or the air-conditioning system of the vehicle, and
that the camera electronics (38) are disposed in the camera holder (4) outside the vehicle, and
that the flow channel (20) is thermally coupled to the camera electronics (38).

2. The external camera device according to claim 1, **characterized in that** the camera holder (4) includes a first and a second holder part (12, 14),
that the flow channel (20) is constructed with an inlet (22) and outlet (24) in the first holder part (12), and
that the camera optics (36), the camera electronics (38), and the optical window (34) are disposed in the second holder part (14).

3. The external camera device according to claim 2, **characterized in that** the second holder part (14) is constructed to be airtight and water-tight.

4. The external camera device according to claim 2 or 3, **characterized in that** the first holder part (12) is constructed as a flow channel (20).

5. The external camera device according to one of the preceding claims, **characterized in that** heat-exchanger equipment (10) is disposed between the two holder parts (12, 14), and wherein the heat-exchanger equipment (10) thermally couples the two holder parts (12, 14) to one another.

6. The external camera device according to claim 4, **characterized in that** the camera holder (4) is constructed in one piece and is divided by the heat-exchanger equipment (10) into the first holder part and the second holder part (12, 14).

7. The external camera device according to one of the preceding claims 5 or 6, **characterized in that** the heat-exchanger equipment (10) is a partition (40) with heat-exchanger fins (42).

8. The external camera device according to one of the preceding claims, **characterized in that** the camera holder (4) includes a mounting surface (16) upon which the external camera device is mounted onto a vehicle (2), and that the inlet (22) of the flow channel (20) is disposed in the mounting surface (16).

9. The external camera device according to claim 8, **characterized in that** the outlet (24) of the flow channel (20) is disposed in the mounting surface (16).

10. The external camera device according to claim 8, **characterized in that** the outlet (24) of the flow channel (20) is disposed adjacent to the optical window (34).

11. The external camera device according to one of the preceding claims, **characterized in that** the outlet (24) of the flow channel (20) includes a plurality of outlet openings (52, 53).

12. The external camera device according to one of the preceding claims, **characterized in that** a first fluid-guide element (54) is disposed in the area of the outlet (24) of the flow channel (20).

13. The external camera device according to claim 12, **characterized in that** the first fluid-guide element (54) is constructed such that it conducts the stream of heat-transport fluid (21) at least in part from the outlet (24) to the optical window (34).

14. The external camera device according to one of the preceding claims, **characterized in that** the camera holder (4) includes a free end (8) pointing away from the vehicle (2) and an end (6) facing the vehicle (2), and that the optical window (34) is laterally disposed in the camera holder (2) between the free end (8) and the mounting surface (16).

15. A vehicle, in particular a motor vehicle, with at least one external camera device (1; 50; 60) according to one of the preceding claims, for recording at least one legally stipulated field of view.

16. The vehicle according to claim 15, **characterized in that** the camera holder (4) extends out laterally away from the vehicle (2).

17. The vehicle according to claim 15 or 16, **characterized in that** the inlet (22) of the flow channel (20) is connected to the ventilation system or the air-conditioning system of the vehicle (2).

18. The vehicle according to claim 17, **characterized in that** the outlet (24) of the flow channel (20) is connected to the ventilation system or the air-conditioning system of the vehicle.

19. The vehicle according to claim 15 or 16, **characterized in that** a second fluid-guide element (56) is provided that directs the fluid flow (21) at least in part from the outlet (24) of the flow channel (20) to a side window (5) of the vehicle (2).

## Revendications

1. Dispositif de caméra extérieure pour véhicules (2), en particulier pour véhicules automobiles, comportant
un support de caméra (4),
une optique de caméra (36) et une électronique de caméra (38), l'optique de caméra (36) étant disposée dans le support de caméra (4),
une fenêtre optique (34) réalisée dans le support de caméra (4) en amont de l'optique de caméra (36), et
un canal d'écoulement (20), réalisé dans le support de caméra (4), pour un fluide transporteur de chaleur (21),
dans lequel ledit canal d'écoulement (20) comporte une entrée (22) et une sortie (24) pour l'admission et l'évacuation du fluide transporteur de chaleur (21),
**caractérisé**
**en ce que** le canal d'écoulement (20) est couplé thermiquement à l'optique de caméra (36),
**en ce que** l'entrée (22) du canal d'écoulement (20) peut être reliée au système de ventilation ou à l'installation de climatisation du véhicule, et
**en ce que** l'électronique de caméra (38) est disposée dans le support de caméra (4) situé à l'extérieur, et
**en ce que** le canal d'écoulement (20) est couplé thermiquement à l'électronique de caméra (38).

2. Dispositif de caméra extérieure selon la revendication 1, **caractérisé**
**en ce que** le support de caméra (4) comporte un premier et un deuxième élément de support (12, 14),
**en ce que** le canal d'écoulement (20) avec l'entrée (22) et la sortie (24) est réalisé dans le premier élément de support (12), et
**en ce que** dans le deuxième élément de support (14) sont disposées l'optique de caméra (36), l'électronique de caméra (38) et la fenêtre optique (34).

3. Dispositif de caméra extérieure selon la revendication 2, **caractérisé en ce que** le deuxième élément de support (14) est réalisé de manière étanche aux gaz et aux liquides.

4. Dispositif de caméra extérieure selon la revendication 2 ou 3, **caractérisé en ce que** le premier élément de support (12) est réalisé sous forme de canal d'écoulement (20).

5. Dispositif de caméra extérieure selon l'une quelconque des revendications précédentes, **caractérisé en ce qu'**entre les deux éléments de support (12, 14) est disposé un système d'échange thermique (10) qui couple thermiquement les deux éléments de support (12, 14) entre eux.

6. Dispositif de caméra extérieure selon la revendication 4, **caractérisé en ce que** le support de caméra (4) est réalisé d'un seul tenant et est divisé en deux parties, à savoir le premier et le deuxième élément de support (12, 14), par le système d'échange thermique (10).

7. Dispositif de caméra extérieure selon l'une quelconque des revendications précédentes 5 ou 6, **caractérisé en ce que** le système d'échange thermique (10) est une cloison (40) avec des nervures d'échange thermique (42).

8. Dispositif de caméra extérieure selon l'une quelconque des revendications précédentes, **caractérisé en ce que** le support de caméra (4) comporte une surface de montage (16) pour le montage du dispositif de caméra extérieure sur un véhicule (2), et **en ce que** l'entrée (22) du canal d'écoulement (20) est disposée dans la surface de montage (16).

9. Dispositif de caméra extérieure selon la revendication 8, **caractérisé en ce que** la sortie (24) du canal d'écoulement (20) est disposée dans la surface de montage (16).

10. Dispositif de caméra extérieure selon la revendication 8, **caractérisé en ce que** la sortie (24) du canal d'écoulement (20) est disposée à côté de la fenêtre optique (34).

11. Dispositif de caméra extérieure selon l'une quelconque des revendications précédentes, **caractérisé en ce que** la sortie (24) du canal d'écoulement (20) comporte une pluralité d'orifices de sortie (52, 53).

12. Dispositif de caméra extérieure selon l'une quelconque des revendications précédentes, **caractérisé en ce que** dans la zone de la sortie (24) du canal d'écoulement (20) est disposé un premier élément de guidage du fluide (54).

13. Dispositif de caméra extérieure selon la revendication 12, **caractérisé en ce que** le premier élément de guidage du fluide (54) est configuré de telle sorte qu'il guide le fluide transporteur de chaleur (21) hors de la sortie (24) au moins partiellement vers la fenêtre optique (34).

14. Dispositif de caméra extérieure selon l'une quelconque des revendications précédentes, **caractérisé en ce que** le support de caméra (4) comporte une extrémité libre (8), orientée en s'écartant du véhicule (2), et une extrémité (6) orientée vers le véhicule, et **en ce que** la fenêtre optique (34) est disposée latéralement dans le support de caméra (2) entre l'extrémité libre (8) et la surface de montage (16).

15. Véhicule, en particulier véhicule automobile, comportant au moins un dispositif de caméra extérieure (1 ; 50 ; 60) selon l'une des revendications précédentes permettant l'enregistrement d'au moins un champ de vision légalement prescrit.

16. Véhicule selon la revendication 15, **caractérisé en ce que** le support de caméra (4) s'étend en s'écartant latéralement du véhicule (2).

17. Véhicule selon la revendication 15 ou 16, **caractérisé en ce que** l'entrée (22) du canal d'écoulement (20) est reliée au système de ventilation ou à l'installation de climatisation du véhicule (2).

18. Véhicule selon la revendication 17, **caractérisé en ce que** la sortie (24) du canal d'écoulement (20) est reliée au système de ventilation ou à l'installation de climatisation du véhicule.

19. Véhicule selon la revendication 15 ou 16, **caractérisé en ce qu'**il est prévu un deuxième élément de guidage du fluide (56), qui guide l'écoulement du fluide (21) hors de la sortie du canal d'écoulement (20) au moins partiellement vers une vitre latérale (5) du véhicule (2).
